# EUROPEAN PATENT APPLICATION

(11) **EP 2 525 591 A1**
(43) Date of publication of application: **21.11.2012**
(21) Application number: 12166406.4
(22) Date of filing: 02.05.2012
(51) Int. Cl.: H04W 4/04, H04W 4/02

(54) **Indoor map distribution**

(30) Priority: 18.05.2011 US 201113110061
(71) Applicant: Sony Mobile Communications AB, 221 88 Lund (SE)
(72) Inventor: Karlsson, Peter, 221 88 Lund (SE); Persson, Magnus, 221 88 Lund (SE)
(74) Representative: Aurell, Henrik

(57) **Abstract**

A device may send registration information for a location dependent application that is associated with an area to a location dependent application information server device. The device may receive, from a user device that is within the area, a request for the location dependent application. In addition, the device may determine whether the location dependent application or an update for the location dependent application is to be uploaded to the user device, and upload the location dependent application or the update for the location dependent application to the user device when it is determined that the location dependent application or the update for the location dependent application is to be uploaded to the user device.

## Description

### BACKGROUND

Few companies, entities, or organizations (e.g., NAVTEQ™, Tele Atlas™, Google Maps™, OpenStreetMap™, etc.) provide data for maps. However, map data from these companies are usually in different formats. This is problematic for users that wish to use maps from different vendors for their applications.

### SUMMARY

According to one aspect, a system may include a location dependent application information server device, a location dependent application server device, and a user device. The location dependent application information server device may be configured to receive registration information that identifies an area and at least one of a location dependent application or a network address from which the location dependent application or a map associated with the area downloads, store the registration information, receive a request for a portion of the registration information from a user device, retrieve the requested portion of the registration information, and send the requested portion to the user device. The location dependent application server device configured to receive, from a user device, a request for the location dependent application or an update to the location dependent application. The location dependent application server device may also be configured to send, to the user device, the location dependent application or the update to the location dependent application. The user device may be configured to send the request for the portion of the registration information to the location dependent application information server device, receive the portion of the registration information from the location dependent application information server device, determine whether the user device is within the area, receive a user input that indicates whether to download the location dependent application or the update to the location dependent application from the location dependent application server device, and download the location dependent application or the update to the location dependent application from the location dependent application server device when the received user input indicates that the user device is to download the location dependent application or the update to the location dependent application.

Additionally, the location dependent application server device may be configured to send the registration information to the location dependent application information server device during the registration.

Additionally, the user device may be further configured to display a notification indicating that the location dependent application server device is available to provide the location dependent application or the update, and wait for the user input.

Additionally, the user device may be further configured to determine a location of the user device.

According to another aspect, a method may include sending registration information for a location dependent application that is associated with an area to a location dependent application information server device, receiving, from a user device that is within the area, a request for the location dependent application, determining whether the location dependent application or an update for the location dependent application is to be uploaded to the user device, and uploading the location dependent application or the update for the location dependent application to the user device when it is determined that the location dependent application or the update for the location dependent application is to be uploaded to the user device.

Additionally, sending the registration information may include sending information about a map of the area to the location dependent application information server device.

Additionally, sending the registration information may include sending information that identifies at least one of the area, the location dependent application, a type of the location dependent application, or an operating system on which the location dependent application runs.

Additionally, the user device may include a cellular telephone, a tablet computer, a mobile Internet device, a laptop computer, or a personal digital assistant.

Additionally, the request may include a request for a map of the area and the location dependent application. Furthermore, the method may further include determining whether the map or an update for the map is to be uploaded to the user device, and uploading the map or the update for the map to the user device when it is determined that the map or the update for the map is to be uploaded to the user device.

Additionally, the map may include an indoor map or a map of the area not covered by an outdoor map.

Additionally, the location dependent application may include an indoor navigation application, an indoor map application, or a virtual tour guide.

According to yet another aspect, a device may include a network interface for communicating with network devices, a memory to store registration information and to store a map and a location dependent application. The map and the location dependent application may be associated with an area. The device may also include a processor. The processor may be configured to determine a location of the device or an identifier associated with the location. The processor may also be configured to identify a location dependent application server device based on the registration information when the location is within the area, contact the location dependent application server device, and download the map from the location dependent application server device.

Additionally, the identifier associated with the location may include an identifier of a cell in which the device is located, or an identifier of a cell that is proximate to another cell in which the device is located.

Additionally, when the processor identifies the location dependent application server device, the processor may be configured to identify the location dependent application, and identify the location dependent application server device on which the location dependent application is stored.

Additionally, when the processor contacts the location dependent application server device, the processor may be configured to obtain information about available location dependent applications from the location dependent application server device.

Additionally, the processor may be further configured to download the location dependent application from the location dependent application server device.

Additionally, when the processor determines the location of the device, the processor may be further configured to at least one of determine the location from a global navigation satellite system (GNSS) receiver, GLONASS receiver, Galileo receiver, or COMPASS receiver included in the device, determine the location based on a cell identifier received from a remote device or mobile base station, determine the location based on short range WiFi communication, and determine the location based on Bluetooth communication.

Additionally, the device may further include a display. Additionally, the processor may be further configured to show, via the display, a notification that indicates the location dependent application or the map is available for downloading from the location dependent server device.

Additionally, the map may include a layout of a building or an outdoor man-made structure that is traversable by a person.

Additionally, the network interface may be further configured to send a request for the registration information to a remote registration information server device, and receive the registration information.

### BRIEF DESCRIPTION OF THE DRAWINGS

The accompanying drawings, which are incorporated in and constitute a part of this specification, illustrate one or more embodiments described herein and, together with the description, explain the embodiments. In the drawings:

FIG. 1 is a diagram of an exemplary network in which concepts described herein may be implemented;

FIGS. 2A and 2B are front and rear views of an exemplary user device of FIG. 1; ,

FIG. 3 is a block diagram of exemplary components of a network device of FIG. 1;

FIG. 4 is a block diagram of exemplary functional components of the user device of FIG. 1;

FIG. 5 is a block diagram of exemplary functional components of a location-dependent application (LDA) server device of FIG. 1;

FIG. 6 is a block diagram of exemplary functional components of an LDA information server device of FIG. 1;

FIG. 7 is a flow diagram of an exemplary process that is associated with the LDA server device of FIG. 1;

FIG. 8 illustrates events that are associated with the processes of FIG. 7 and FIG. 9; and

FIG. 9 is a flow diagram of an exemplary process that is associated with the user device of FIG. 1.

### DETAILED DESCRIPTION

The following detailed description refers to the accompanying drawings. The same reference numbers in different drawings may identify the same or similar elements. As used herein, the term "an indoor map" may refer to data that describes an internal layout (e.g., a map) of building(s), mall, shop, or another man-made structure having an interior (e.g., a shopping plaza). For example, an indoor map may describe a layout of a grocery store (e.g., what types of items are on shelves in an aisle). In another example, an indoor map may describe a layout of an outdoor man-made structure that is traversable by a person. The indoor map may include a map of an area not covered by an outdoor map.

In the following, a system may distribute applications and/or maps to user devices. The system may include location-dependent application (LDA) servers that are associated with designated areas, regions, or locations. When a user device enters one of the areas/regions, the user device may obtain or update a map and/or an LDA (e.g., a map application) from an LDA server associated with the area.

In some implementations, LDAs and/or maps that the system distributes may include indoor map applications and/or indoor maps. In general, an indoor map tends to be more detailed than an outdoor map, and access to a building is generally needed to identify the details. These factors render producing indoor maps and writing indoor map applications difficult, and may lead to many indoor map formats, as well as many different types of indoor map applications. The system described herein allows users to easily manage, access, and use a large number of different indoor map applications and maps having different formats.

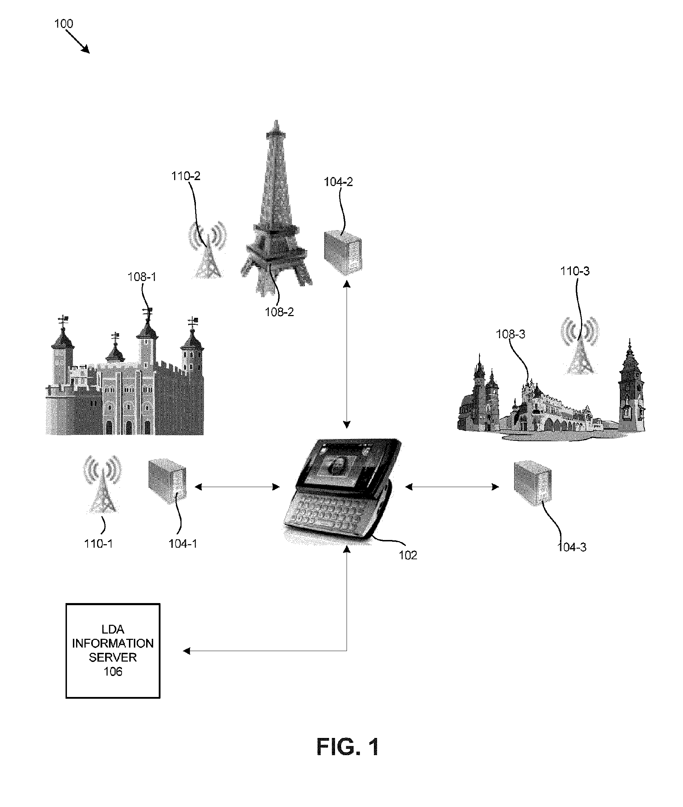

FIG. 1 is a diagram of an exemplary network 100 in which concepts described herein may be implemented. Network 100 may include a cellular network, public switched telephone network (PSTN), local area network (LAN), wide area network (WAN), a wireless LAN, metropolitan area network (MAN), Internet Protocol (IP) based High Speed Packet Access (HSPA) network, evolved HSPA network, Long Term Evolution (LTE) network, intranet, the Internet, satellite-based network, a fiber-optic network (e.g., passive optical networks (PONs)), an ad hoc network, any other network, or a combination of networks. Devices that are shown in FIG. 1 may connect to network 100 via wireless, wired, or optical communication links. In addition, network 100 may allow any of the devices to communicate with any other device.

As shown in FIG. 1, network 100 may also include a user device 102, LDA server devices 104-1 through 104-3 (individually "LDA server device 104" and collectively "LDA server devices 104"), and an LDA information server device 106.

User device 102 may receive information related to an area or an LDA associated with the area from a server (e.g., LDA information server device 106). The information may describe an area, region, and/or location and may include identifiers (e.g., a building number, address, etc.) for the area.

In addition, the information may include network addresses (e.g., Universal Resource Identifiers (URIs), a Universal Resource Locator (URL), IP addresses, etc.). The network addresses may include, for example, a URL at which an LDA for or associated with the area can be downloaded, a link to a description of the area/LDA application, etc.

After user device 102 downloads the information, user device 102 may monitor its own location. When user device 102 enters a particular area (e.g., a landmark 108-1 (e.g., a castle)), user device 102 may locate and contact an LDA server device for the area (e.g., LDA server device 104-1) based on the downloaded information. Device 102 may obtain any updates to maps and LDAs for the area from the LDA server device (e.g., device 104).

LDA server device 104 may be associated with one or more areas. For example, in FIG. 1, LDA server devices 104-1 through 104-3 are associated with a Tower of London 108-1, Eiffel Tower 108-2, and basilica 108-3. Although each of LDA server devices 104 are depicted as being in a vicinity of areas/buildings 108-1 through 108-3, LDA server device 104 may be physically far away from or close to the area with which the device is associated. In addition, in some implementations, a single LDA server device 104 may cover/serve one or more areas/buildings. Furthermore, in some implementations, an area/building may include a wireless access point (WAP) (e.g., indoor 2G/3G base stations, WiFi access points, etc.). WAPs 110-1, 110-2, and 110-3) via which user device 102 may track its own location within the area or access an LDA server device 104 associated with the area.

LDA server device 104 may register an LDA, for a given area, at LDA information server device 106. In registering the LDA, LDA server device 104 may provide registration information to LDA information server device 106. The registration information may include, for example, an identifier for the area with which the LDA is associated, an identifier for the LDA, an identifier for LDA type (e.g., map application, indoor location based service (LBS) program, Global Positioning System (GPS) program, GLONASS program, or WAP program, a virtual tourist guide, etc.), an LDA version number/ID, network addresses at which the LDA, maps, and/or descriptions (e.g., a description of the LDA, a description of the area, etc.) for the area that may be downloaded, etc.

When user device 102 enters the area covered by LDA server device 104 and contacts LDA server device 104, LDA server device 104 may communicate with user device 102. Furthermore, depending on the communication, LDA server device 104 may send information for updating the LDA and/or updated map(s) of the area to user device 102. If user device 102 does not include the LDA, user device 102 may receive the LDA for installation.

LDA information server device 106 may receive registration information from LDA server devices 104 and store the registration information in its database. In addition, upon receiving a request from user device 102, LDA information server device 106 may retrieve information pertaining to LDAs, LDA server devices, and other portions of the registration information from its own database and provide the retrieved information to user device 102.

Although network 100 may include devices other than devices 102, 104, and 106, and 110, for simplicity, such devices (e.g., routers, bridges, switches, gateways, etc.) are not illustrated in FIG. 1. Furthermore, depending on the implementation, network 100 may include additional, fewer, or different devices than the ones illustrated in FIG. 1. For example, in some implementations, network 100 may include hundreds, thousands, or more user devices, LDA server devices, etc.

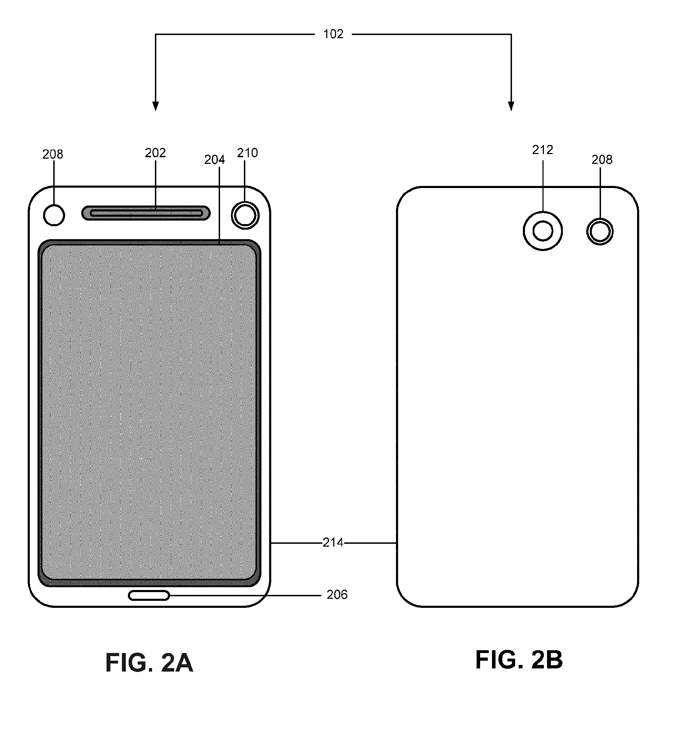

FIGS. 2A and 2B are front and rear views of one implementation of user device 102. User device 102 may include any of the following devices that have the ability to, or are adapted to, display images, such as a cell phone or a mobile telephone with a display (e.g., smart phone); a mobile Internet device; a tablet computer; an electronic notepad; a gaming console; a laptop; a personal computer; a personal digital assistant (PDA); a peripheral (e.g., wireless headphone, wireless display, etc.); a digital camera; or another type of computational or communication device, etc.

As shown in FIGS. 2A and 2B, user device 102 may include a speaker 202, a display 204, a microphone 206, sensors 208, a front camera 210, a rear camera 212, and housing 214. Speaker 202 may provide audible information to a user/viewer of user device 102.

Display 204 may provide visual information to the user. In some implementations, display 204 may include a touch-screen, for receiving user input (e.g., single-touch input or multi-touch input). Microphone 206 may receive audible information from the user. Sensors 208 may collect and provide, to user device 102, information pertaining to user device 102 (e.g., location, movement, orientation, etc.), information that is used to aid the user in capturing images (e.g., for providing information for auto-focusing to front/rear cameras 210/212) and/or information for determining a distance between user device 102 and a subject.

Front camera 210 and rear camera 212 may enable a user to view, capture, store, and process images of a subject located at the front/back of user device 102. Front camera 210 may be separate from rear camera 212 that is located on the back of user device 102. Housing 214 may provide a casing for components of user device 102 and may protect the components from outside elements.

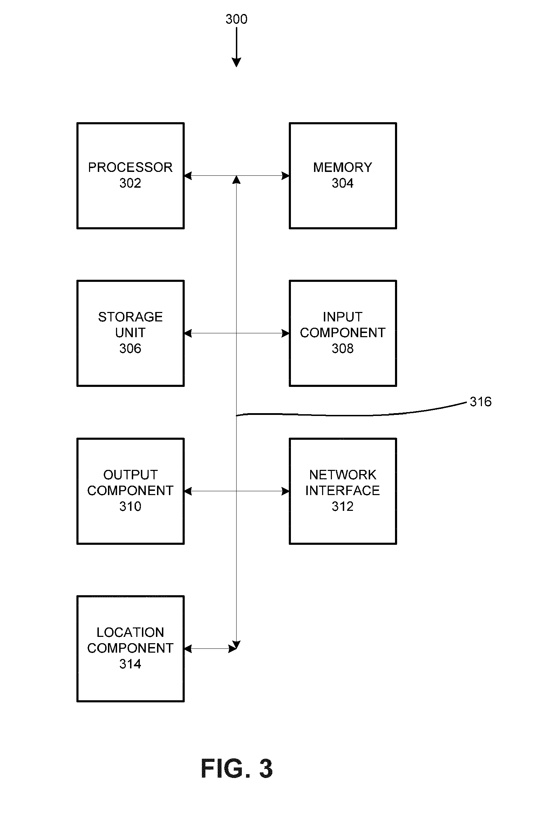

FIG. 3 is a block diagram of network device 300. Network device 300 may represent any of devices 102, 104, and 106. As shown, network device 300 may include a processor 302, a memory 304, storage unit 306, input component 308, output component 310, a network interface 312, a location component 314, and a communication path 316. In different implementations, network device 300 may include additional, fewer, or different components than the ones illustrated in FIG. 3.

Processor 302 may include a processor, a microprocessor, an Application Specific Integrated Circuit (ASIC), a Field Programmable Gate Array (FPGA), and/or other processing logic capable of controlling network device 300. Memory 304 may include static memory, such as read only memory (ROM), and/or dynamic memory, such as random access memory (RAM), or onboard cache, for storing data and machine-readable instructions.

Storage unit 306 may include a magnetic and/or optical storage/recording medium. In some embodiments, storage unit 306 may be mounted under a directory tree or may be mapped to a drive. Depending on the context, the term "medium," "memory," "storage," "storage device," "storage medium," and/or "storage unit" may be used interchangeably. For example, a "computer readable medium,""computer-readable storage device" and "computer readable storage medium" may refer to both a memory and/or storage device.

Input component 308 may permit a user to input information to network device 102. Input component 308 may include, for example, a keyboard, a keypad, a mouse, a pen, a microphone, a touch screen, voice recognition and/or biometric mechanisms, sensors, etc. Output component 310 may output information to the user. Output component 310 may include, for example, a display, a printer, a speaker, etc.

Network interface 312 may include a transceiver that enables user device 102 to communicate with other devices and/or systems. For example, network interface 312 may include mechanisms for communicating via a network, such as the Internet, a mobile network; a terrestrial wireless network (e.g., a WLAN), a satellite-based network, a personal area network (PAN), a WPAN, etc. Additionally or alternatively, network interface 312 may include a modem, an Ethernet interface to a LAN, and/or an interface/connection for connecting device 102 to other devices (e.g., a Bluetooth interface).

Location component 314 may include hardware and/or software for obtaining position information of user device 102. For example, location component 314 may include a GNSS receiver (GPS GLONASS, COMPASS, or Galileo receiver), a GPS program, a program for locating user device 102 based on WiFi signals, a program for obtaining position/location based on cell ID of the area in which user device 102 is located, etc.

Communication path 316 may provide an interface through which components of network device 102 can communicate with one another.

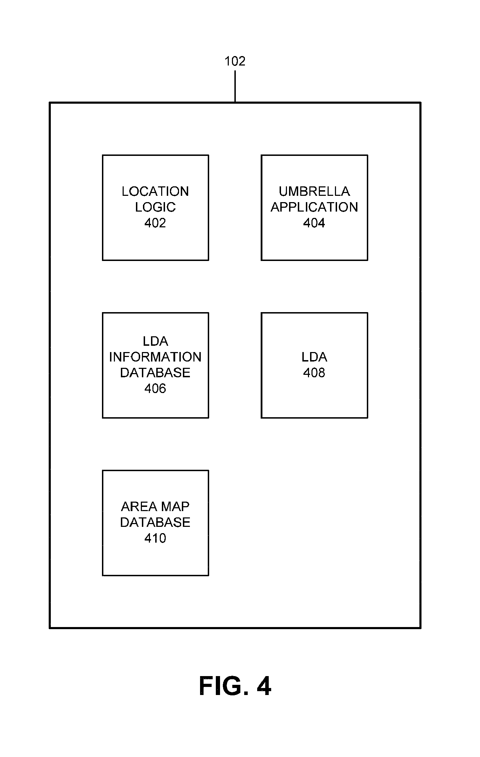

FIG. 4 is a block diagram of exemplary functional components of user device 102. As shown, user device 102 may include location logic 402, an umbrella application 404, an LDA information database 406, an LDA 408, and an area map database 410. Depending on the implementation, user device 102 may include additional, fewer, different, or different arrangement of components than those illustrated in FIG. 4. For example, user device 102 may include an email client application, a text messaging application, a phone application, etc.

Location logic 402 may determine the location of user device 102. Depending on the implementation, location logic 402 may determine the location in one or more ways. For example, in some implementations, location logic 402 may obtain the location from a GPS receiver included in user device 102 or via WiFi communication interface (e.g., location component 314). In another implementation, location logic 402 may receive its location from a base station that is positioned in/near an area with which an LDA is associated. In this implementation, the base station may inform one or more components in user device 102 of the cell ID and its location. Location logic 402 may determine its own location based on the cell ID.

Umbrella application 404 may download information to populate or update LDA information database 406 from LDA information server device 106. Depending on the implementation, umbrella application 404 may automatically contact LDA information server device 106, or alternatively, may be activated by a user to download the information from LDA information server device 106

Umbrella application 404 may determine the location of user device 402 via location logic 402. When user device 402 is in an area or near one or more areas, based on LDA information database 406, umbrella application 404 may contact LDA server device 104 associated with the area(s) and request information about maps and/or LDAs that are associated with the area(s). If LDA server device 104 indicates that it has a new LDA or an update for an LDA already installed on user device (e.g., LDA 408), umbrella application 404 may download and store the new LDA, from LDA server device 104, as LDA 408, or may obtain the update from LDA server device 104 (to modify LDA 408). Additionally, if LDA server device 104 has a new map and/or an update to the map (e.g., a map in area map database 410), umbrella application 404 may download the map and/or the update and store the map in area map database 410.

LDA 408 may include a location-dependent application that is downloaded from LDA server device 104. LDA 408 may include, for example, a map application that illustrates a layout of a building, mall, store, etc.; an application for giving directions in a given area; a virtual tourist program that provides text- or voice-based description of locations or landmarks; a shopping mall program that provides a list of all purchasable items in a store; etc.

Area map database 410 may include one or more maps that LDA 408 may use for drawing maps, for giving directions, for dispensing information (e.g., speech or text) pertaining to specific locations within the area (e.g., locations within a museum), etc. The maps in area map database 410 may have been obtained from LDA server device 104.

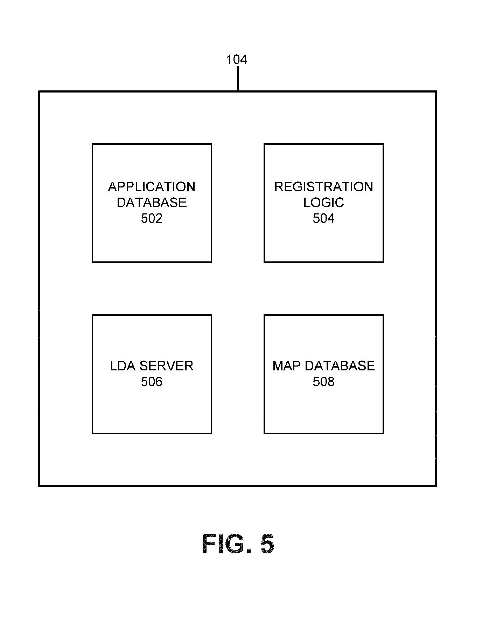

FIG. 5 is a block diagram of exemplary functional components of LDA server device 104. As shown, LDA server device 104 may include an application database 502, registration logic 504, an LDA server 506, and a map database 508. Depending on the implementation, LDA server device 104 may include additional, fewer, different, or different arrangement of functional components than those illustrated in FIG. 5. For example, in one implementation, LDA server device 104 may not include application database 502 or map database 508.

Application database 502 may include a database of LDAs and information pertaining to the LDAs. For example, in one implementation, a record in application database 502 may include a copy of an LDA, an identifier associated with the LDA, an identifier associated with the type of LDA, a URL at which the LDA may be downloaded to a client (e.g., browser) via LDA server 506, a description of the LDA or the area with which the LDA is associated, an identifier associated with the area, etc. Application database 502 may be modified by an operator, administrator, software program, etc.

Registration logic 504 may register an LDA, which may be in application database 502, at LDA information server device 106. In registering the LDA, registration logic 504 may provide information pertaining to the LDA (the information in application database 502) to LDA information server device 106. In addition, registration logic 504 may send updates to LDA information server device 106 when application database 502 is updated.

LDA server 506 may receive a request for one or more LDAs and/or maps. The request may include, for example, an area identifier, LDA type, system parameters (e.g., operating system (OS) (e.g., version, type, etc.) of user device 102, etc.), etc. Based on the request, LDA server 506 may retrieve, from application database 502 and map database 508, one or more LDAs and/or maps that match the requirements specified in the request. For example, an area ID in the request may identify LDAs and maps for particular area(s). In another example, the request may identify the OS and/or processor type. In each of these examples, LDA server 506 may retrieve matching LDAs and maps from application database 502 and map database 508, and send the retrieved LDAs and maps to user device 102.

Map database 508 may include maps. Each map may or may not be in a format different from those of other maps. The maps in map database 508 may be used by LDAs in application database 502.

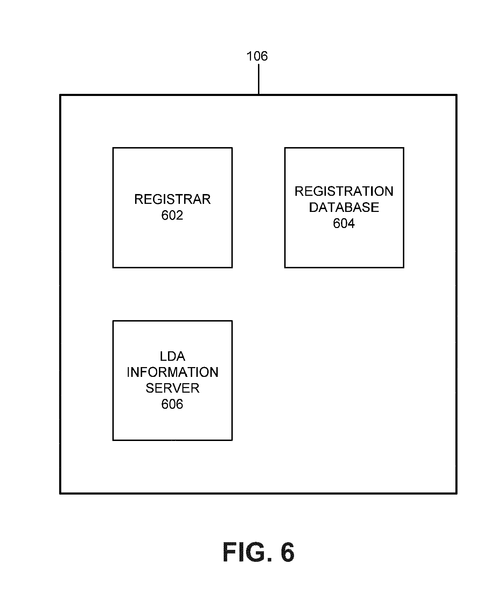

FIG. 6 is a block diagram of exemplary functional components of LDA information server device 106. As shown LDA information server device 106 may include a registrar 602, registration database 604, and LDA information server 606. Depending on the implementation, LDA information server device 106 may include additional, fewer, different, or different arrangement of functional components than those illustrated in FIG. 6.

Registrar 602 may receive registration information from LDA server device 104. Registration database 604 may store the registration information received by registrar 602.

LDA information server 606 may receive a request from user device 102 to provide user device 102 with information pertaining to LDAs and/or maps. The request may specify, for example, areas (e.g., street), the type of LDAs, processor or operating system, etc., and other parameters relevant for retrieving information related to LDAs. Upon retrieving the requested information from registration database 604, LDA information server 606 may transmit the information to user device 102.

### EXEMPLARY PROCESSES

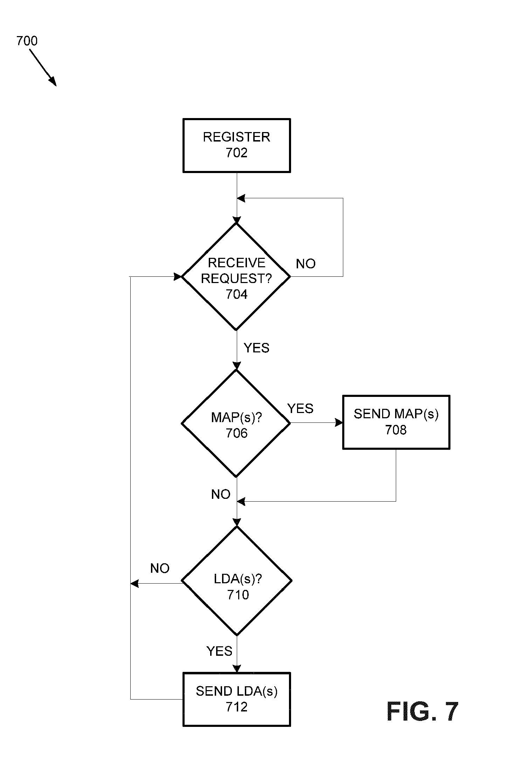

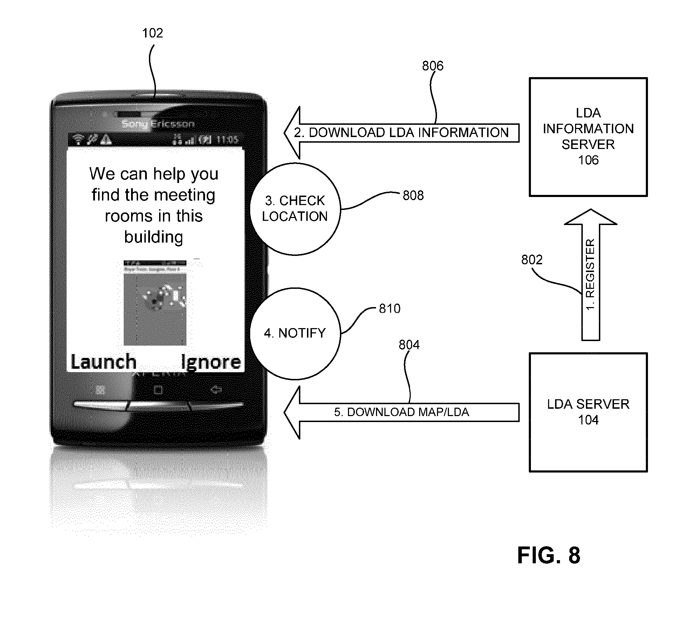

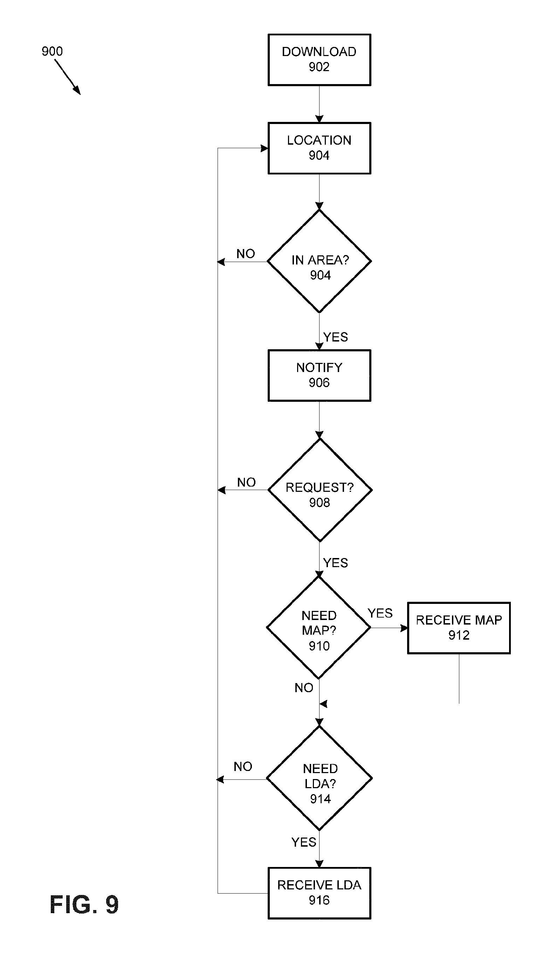

FIG. 7 is a flow diagram of an exemplary process 700 that is associated with LDA server device 104. FIG. 8 illustrates events that are associated with process 700 and process 900 of FIG. 9 (see below). As shown in FIG. 7, process 700 may include registering one or more LDAs with LDA information server device 106. As described above, the registration may entail sending registration information to LDA information server device 106. In FIG. 8, arrow 802 illustrates the registration process.

LDA server device 104 may determine whether it has received a request from user device 102 (block 704). When user device 102 enters one of area s that LDA server device 104 covers, user device 102 may notify a user that LDA server device 104 or its associated services (e.g., providing an indoor map or LDA) are available.

Either with a user's input/authorization or automatically, user device 102 may send a request for LDA/map-related information to LDA server device 104. If LDA server device 104 receives a request (block 704: yes), process 700 may proceed to block 706. Otherwise (block 704: no), process 700 may return to block 704.

As a result of the request, user device 102 or LDA server device 104 may determine whether LDA(s) and/or map(s) in user device 102 need to be updated, and whether new LDA(s) and map(s) need to be downloaded to user device 102. If user device 102 needs new map(s) or needs updates to maps in user device 102 (block 706: yes), LDA server device 104 may send the maps/updates to user device 102 (block 708). After block 708, process 700 may proceed to block 710. If user device 102 does not need a new map or an update to a map (block 706: no), process 700 may proceed to block 710.

If user device 102 needs a new LDA(s) or needs updates to LDA(s) in user device 102 (block 710: yes), LDA server device 104 may send the LDAs/updates to user device 102 (block 712) and return to block 704. In FIG. 8, arrow 806 shows LDA server device 104 sending an LDA, a map, or updates to user device 102. If user device 102 does not need a new LDA or an update, process 700 may return to block 704. At block 704, LDA server device 104 may wait (e.g., looping back to block 704) until LDA server device 104 receives a request or a message from user device 102.

FIG. 9 is a flow diagram of an exemplary process 900 that is associated with user device 102. As shown in FIG. 9, process 900 may include downloading a set of registration information from LDA information server device 106 (block 902). In FIG. 8, arrow 806 illustrates the downloading.

To download the registration information, user device 102 may contact LDA information server device 106, specifying a number of parameters that may be used in pinpointing the information which user device 102 may obtain from LDA information server device 106. Based on the parameters (e.g., area IDs) received from user device 102, LDA information server device 106 may retrieve and send information pertaining to LDAs and/or maps for the specified areas to user device 102.

User device 102 may determine its own location (block 904). As discussed above, user device 102 may use a GNSS receiver, WiFi, or cell ID of the area in which user device is located, etc. and/or other parameters to determine its own location. In FIG. 8, circle 808 shows user device 102 determining its own location.

If user device 102 determines that user device 102 is not within an area associated with an LDA (block 904: no), process 900 may return to block 904. Otherwise (block 904: yes), user device 102 may notify a user of availability of LDA services and/or LDA server device 104 (block 906). In FIG. 8, circle 810 shows user device 102 notifying its user.

After the notification, if the user indicates that user device 102 is not to request LDA server device 104 for new LDA/map or updates (block 908: no), process 900 may return to bock 904. Otherwise (block 908: yes), process 900 may proceed to block 910.

If user device 102 and/or LDA server device 104 determine that user device 102 needs to download a new map(s) and/or update(s) (block 910: yes), user device 102 may receive the new map(s) and/or update(s) from LDA server device 104 (block 912) and proceed to block 914. Otherwise (block 910: no), process 900 may proceed to block 914.

If user device 102 and/or LDA server device 104 determines that user device 102 needs to download a new LDA(s) or update(s) (block 914: yes), user device 102 may receive the new LDA(s) and/or update(s) from LDA server device 104 (block 914) and proceed to bock 904. Otherwise (block 914: no), process 900 may proceed to block 904.

### EXAMPLE

The following example, with reference to FIG. 1, illustrates processes 700 and 900. Assume that Magnus and Peter are traveling from London to Paris. Also assume that Magnus owns user device 102 and that Magnus has downloaded information pertaining to LDAs in areas near Paris and London from LDA information server device 106.

When Magnus and Peter are at London, Magnus and Peter visit Tower of London 108-1. Upon entering Tower of London 108-1, user device 102 establishes a connection to a cellular service via a WAP 110-1 in or near Tower of London 108-1, and provides user device 102 with a cell ID. User device 102 uses the cell ID to determine its own location. By using a cell ID, user device 102 may determine its own location in an energy efficient manner (i.e., consuming less power).

In some implementations, user device 102 may also send the current cell ID directly to LDA server device 104 or, alternatively, match the cell ID in a local table of cell IDs with LDAs, to determine if any applications (i.e., LDAs) are available for the area. Once the LDAs are identified, user device 102 may identify the LDA server device 104 from which the LDAs can be obtained. Thus, when using the local table, user device 102 may not translate the cell ID first into an identifier associated with locations, and hence, may save computational resource/power (e.g., battery power). In some implementations, to increase the accuracy, IDs of the neighboring cells can be used in the lookup in the local table, not just the ID of the cell in which user device 102 is located (radio fingerprint).

When user device 102 determines that user device 102 is in Tower of London 108-1, user device 108-1 notifies Magnus that LDA server device 104-1 for Tower of London 108-1 is accessible, and that Magnus may wish to download both the indoor map of Tower of London 108-1 and a map application that can display the indoor map to Magnus. Magnus downloads the map and the application.

When Magnus and Peter arrive in Paris, near Eiffel Tower 108-2, user device 102 notifies Magnus that LDA server device 104-2 for area near Eiffel Tower is accessible, and that Magnus may download indoor maps of different shops. Because the maps are in a format different from the indoor map of Tower of London, Magnus downloads a map application specifically designed to display the indoor maps of the shops. Using the maps, Magnus and Peter are quickly able to locate and purchase presents for their family and friends.

### CONCLUSION

As described above, a system may distribute applications and/or maps to user device 102. The system may include LDA servers that are associated with designated areas, regions, or locations. When user device 102 enters one of the areas/regions, user device 102 may obtain or update a map and/or an LDA (e.g., a map application) from LDA servers associated with the area.

The foregoing description of implementations provides illustration, but is not intended to be exhaustive or to limit the implementations to the precise form disclosed. Modifications and variations are possible in light of the above teachings or may be acquired from practice of the teachings.

In the above, while series of blocks have been described with regard to the exemplary processes illustrated in FIGS. 7 and 9, the order of the blocks may be modified in other implementations. In addition, non-dependent blocks may represent acts that can be performed in parallel to other blocks. Further, depending on the implementation of functional components, some of the blocks may be omitted from one or more processes.

It will be apparent that aspects described herein may be implemented in many different forms of software, firmware, and hardware in the implementations illustrated in the figures. The actual software code or specialized control hardware used to implement aspects does not limit the invention. Thus, the operation and behavior of the aspects were described without reference to the specific software code - it being understood that software and control hardware can be designed to implement the aspects based on the description herein.

It should be emphasized that the term "comprises/comprising" when used in this specification is taken to specify the presence of stated features, integers, steps or components but does not preclude the presence or addition of one or more other features, integers, steps, components, or groups thereof.

Further, certain portions of the implementations have been described as "logic" that performs one or more functions. This logic may include hardware, such as a processor, a microprocessor, an application specific integrated circuit, or a field programmable gate array, software, or a combination of hardware and software.

No element, act, or instruction used in the present application should be construed as critical or essential to the implementations described herein unless explicitly described as such. Also, as used herein, the article "a" is intended to include one or more items. Further, the phrase "based on" is intended to mean "based, at least in part, on" unless explicitly stated otherwise.

## Claims

1. A device comprising:
a network interface for communicating with network devices;
a memory to:
store registration information, and
store a map and a location dependent application, the map and the location dependent application being associated with an area; and
a processor to:
determine a location of the device or an identifier associated with the location;
identify a location dependent application server device based on the registration information when the location is within the area;
contact the location dependent application server device; and
download the map from the location dependent application server device.

2. The device of claim 1, wherein the identifier associated with the location includes an identifier of a cell in which the device is located, or
an identifier of a cell that is proximate to another cell in which the device is located.

3. The device of any of claims 1 and 2, wherein when the processor identifies the location dependent application server device, the processor is configured to:
identify the location dependent application; and
identify the location dependent application server device on which the location dependent application is stored.

4. The device of any of claims 1-3, wherein when the processor contacts the location dependent application server device, the device is configured to:
obtain information about available location dependent applications from the location dependent application server device.

5. The device of any of claims 1-4, wherein the processor is further configured to:
download the location dependent application from the location dependent application server device.

6. The device of any of claims 1-5, wherein when the processor determines the location of the device, the processor is configured to at least one of:
determine the location from a global navigation satellite system (GNSS) receiver, GLONASS receiver, Galileo receiver, or COMPASS receiver included in the device;
determine the location based on a cell identifier received from a remote device or a mobile base station;
determine the location based on short range WiFi communication; and
determine the location based on Bluetooth communication.

7. The device of any of claims 1-6, further comprising a display, wherein the processor is further configured to:
show, via the display, a notification that indicates the location dependent application or the map is available for downloading from the location dependent server device.

8. The device of any of claims 1-7, wherein the map includes a layout of a building or an outdoor man-made structure that is traversable by a person.

9. The device of any of claims 1-8, wherein the network interface is further configured to:
send a request for the registration information to a remote registration information server device, and
receive the registration information.

10. A method comprising:
sending registration information for a location dependent application that is associated with an area to a location dependent application information server device;
receiving, from a user device that is within the area, a request for the location dependent application;
determining whether the location dependent application or an update for the location dependent application is to be uploaded to the user device; and
uploading the location dependent application or the update for the location dependent application to the user device when it is determined that the location dependent application or the update for the location dependent application is to be uploaded to the user device.

11. The method of claim 10, wherein sending the registration information includes:
sending information about a map of the area to the location dependent application information server device.

12. The method of claim 10, wherein sending the registration information includes sending information that identifies at least one of the area, the location dependent application, a type of the location dependent application, or an operating system on which the location dependent application runs.

13. The method of any of claims 10-12, wherein the request includes a request for a map of the area and the location dependent application, the method further comprising:
determining whether the map or an update for the map is to be uploaded to the user device; and
uploading the map or the update for the map to the user device when it is determined that the map or the update for the map is to be uploaded to the user device.

14. The method of claim 13, wherein the map includes an indoor map or a map of the area not covered by an outdoor map.

15. The method of claim 14, wherein the location dependent application includes an indoor navigation application, an indoor map application, or a virtual tour guide.
